# EUROPEAN PATENT APPLICATION

(11) **EP 4 527 266 A1**
(43) Date of publication of application: **26.03.2025**
(21) Application number: 22942479.1
(22) Date of filing: 05.12.2022
(51) Int. Cl.: A47J 43/07, A47J 19/00, H01M 50/244

(54) **KITCHEN APPLIANCE**

(30) Priority: 18.05.2022 CN 202221198596 U
(71) Applicant: Kingclean Electric Green Technology (Suzhou) Co., Ltd., Suzhou, Jiangsu 215000 (CN)
(72) Inventor: ZHANG, Bing, Suzhou, Jiangsu 215000 (CN); LI, Dezhi, Suzhou, Jiangsu 215000 (CN); WEN, Xiujing, Suzhou, Jiangsu 215000 (CN)
(74) Representative: Mewburn Ellis LLP
(86) International application number: PCT/CN2022/136549
(87) International publication number: WO 2023/221459

(57) **Abstract**

The present disclosure relates to a kitchen appliance, including: a body, a mounting cavity being providing in the body, and the mounting cavity having a mounting opening located on a surface of the body; and a battery pack detachably connected to the body. The battery pack has a mounted state and a dismounted state. In the dismounted state, the battery pack is capable of moving into or out of the mounting cavity through the mounting opening, and after the battery pack is separated from the body, the mounting cavity is exposed to the surface of the body. In the mounted state, the battery pack is mounted in the mounting cavity, and an end of the battery pack is exposed through the mounting opening. According to the kitchen appliance, a battery life can be prolonged by replacing the battery pack, and the replacement is more convenient, so that the operation of prolonging the battery life by replacing the battery pack can be performed smoothly.

## Description

### CROSS-REFERENCE TO RELATED APPLICATIONS

This application claims priority to Chinese Patent Application No. 202221198596.7, filed on May 18, 2022 and entitled "KITCHEN APPLIANCE", the entire content of which is incorporated herein in its entirety.

### TECHNICAL FIELD

The present disclosure relates to the field of kitchen appliance technologies, and in particular, to a kitchen appliance.

### BACKGROUND

With continuous development of science and technology, kitchen appliances such as juice extractors, meat grinders, and cooking machines have gradually entered our kitchens, making daily cooking more convenient. In the related art, in order to make such appliances more portable, the appliances are generally designed to be powered by a battery pack, and the battery pack supplies power to components such as a motor to ensure normal operation of the kitchen appliance. However, in the related art, some kitchen appliances have a short battery life. Although the battery life of some kitchen appliances can be prolonged by replacing the battery pack, battery replacement is troublesome.

### SUMMARY

Accordingly, the present disclosure provides a kitchen appliance, according to which a battery life can be prolonged by replacing a battery pack and the replacement is more convenient, so that the operation of prolonging the battery life by replacing the battery pack can be performed smoothly.

A kitchen appliance includes: a body, a mounting cavity being providing in the body, and the mounting cavity having a mounting opening located on a surface of the body; and a battery pack detachably connected to the body; the battery pack has a mounted state and a dismounted state, in the dismounted state, the battery pack is capable of moving into or out of the mounting cavity through the mounting opening, and after the battery pack is separated from the body, the mounting cavity is exposed to the surface of the body; and in the mounted state, the battery pack is mounted in the mounting cavity, and an end of the battery pack is exposed through the mounting opening.

In an embodiment, the body includes a first engaging portion, and the battery pack includes a second engaging portion; and in the mounted state, the first engaging portion is engaged with the second engaging portion.

In an embodiment, the battery pack includes a plurality of second engaging portions, the plurality of second engaging portions are configured to adapt to the first engaging portions in the bodies of different types, respectively.

In an embodiment, with a direction in which the battery pack moves into the mounting cavity through the mounting opening as a mounting direction, the plurality of second engaging portions are spaced apart on a side wall of the battery pack along the mounting direction.

In an embodiment, the body is a vegetable cutter, a juice extractor, or a meat grinder, the body includes a base and a first body, the first body is detachably connected to the base, a motor is mounted in the base, the first body includes a working chamber, a cutting member is mounted in the working chamber, and the cutting member is configured to be driven by the motor to rotate for cutting; and the mounting cavity is located in the base, and the mounting opening is located on a bottom surface of the base.

In an embodiment, two of the second engaging portions are spaced apart on the side wall of the battery pack along the mounting direction, and in the two second engaging portions, the one located at a rear end in the mounting direction is configured to adapt to the first engaging portion in the vegetable cutter, the juice extractor, or the meat grinder.

In an embodiment, the vegetable cutter includes a first locking member, a button, and a first elastic member, the button is exposed through the bottom surface of the base, the button includes a first sloping surface, and the first locking member includes a second sloping surface;
the first elastic member abuts against the first locking member, so that the second sloping surface is attached to the first sloping surface, and the first elastic member is configured to push the first engaging portion and the second engaging portion to be close to each other through an elastic force of the first elastic member; and
the button is capable of moving towards the first locking member so that the first sloping surface abuts against the second sloping surface to push the first engaging portion and the second engaging portion to be away from each other, wherein a direction in which the first engaging portion and the second engaging portion are away from each other is perpendicular to a moving direction of the button.

In an embodiment, the vegetable cutter includes a mounting rack fixedly mounted to the base, the button and the first locking member are both slidably connected to the mounting rack, and the first elastic member is provided between the first locking member and the mounting rack.

In an embodiment, the battery pack has a first depth and a second depth extending into the mounting cavity through the mounting opening, the second depth is greater than the first depth; and when the battery pack extends into the first depth through the mounting opening, the battery pack is in the mounted state; and when the battery pack moves from the first depth to the second depth, the battery pack switches to the dismounted state.

In an embodiment, the vegetable cutter includes a second locking member and a limiting member, in the dismounted state, the battery pack is configured to move towards the mounting cavity and push the second locking member to move simultaneously until the battery pack is engaged with and fixed to the second locking member, and the second locking member is limited by the limiting member to maintain the mounted state; and in the mounted state, the battery pack is configured to move further into the mounting cavity and push the second locking member to move simultaneously, so that the second locking member is disengaged from the limiting of the limiting member, thereby separating the battery pack from the second locking member.

In an embodiment, the vegetable cutter includes a mounting sleeve, the limiting member is connected to the mounting sleeve, a third sliding groove is provided in the mounting sleeve, the second locking member extends into the third sliding groove, a second elastic member is provided between the second locking member and the mounting sleeve, the second locking member is provided with a limiting portion, and the battery pack includes a locking block;
in the dismounted state, when the battery pack is pressed, the second locking member slides into the third sliding groove along the mounting direction under abutment of the locking block and gradually closes under limiting of the third sliding groove, and when the pressing of the battery pack is stopped, the second locking member is driven by the second elastic member to slide out of the third sliding groove along a direction opposite to the mounting direction until the second locking member holds the locking block tightly when the limiting member locks the limiting portion; and
in the mounted state, when the battery pack is pressed, the second locking member slides into the third sliding groove along the mounting direction under abutment of the locking block, so that the limiting member is separated from the limiting portion and when the pressing of the battery pack is stopped, the second locking member is driven by the second elastic member to slide out of the third sliding groove along the direction opposite to the mounting direction and gradually opens, until the second locking member is separated from the locking block.

In an embodiment, the second locking member is provided with a first limiting groove and a second limiting groove in communication with each other, the first limiting groove and the second limiting groove are arranged around the limiting portion, and when the battery pack is mounted, the limiting member moves in the first limiting groove; and when the battery pack is dismounted, the limiting member moves in the second limiting groove.

In an embodiment, the limiting portion is V-shaped to form a locking groove, the limiting portion is provided with a first limiting surface, and the second limiting groove includes a second limiting surface;
in the dismounted state, when the battery pack is pressed, the limiting member is attached the first limiting surface to move relatively along the direction opposite to the mounting direction, and when the pressing of the battery pack is stopped, the limiting member moves relatively along the mounting direction and is locked in the locking groove; and
in the mounted state, when the battery pack is pressed, the limiting member is separated from the locking groove, and fits the second limiting surface to move relatively along the direction opposite to the mounting direction, and when the pressing of the battery pack is stopped, the limiting member moves relatively along the mounting direction and reaches an outlet of the second limiting groove.

In an embodiment, the limiting member is an elastic rod, the elastic rod is fixedly connected to the mounting sleeve, a free end of the elastic rod is bent relative to a main body section of the elastic rod, the free end is capable of being locked in the locking groove.

In an embodiment, outer contours of projections of the base, the motor, and the battery pack along the mounting direction are all circular orquasi-circular, and the motor is located at a central position of the working chamber along a radial direction of the base; and a radius of the base is R, a diameter of the battery pack is d, and a radius of the motor is r, R=K(d+r), where 1≤K≤1.2.

In an embodiment, in the mounted state, in a plane perpendicular to the mounting direction, a projection of a center of the battery pack is a first position, a projection of a center of the motor is a second position, a projection of a center of gravity of the kitchen appliance is a third position, and the third position is located on a line connecting the first position and the second position.

In an embodiment, a distance between the second position and the third position is s, and a weight of the battery pack is m, where 0.024≤s/m≤0.032.

In an embodiment, the body is a stirrer, the stirrer includes a second body, a handle, and a stirring head capable of being driven by a motor to perform stirring, a side of the second body is connected to the handle, the other side of the second body is connected to the stirring head, an extension direction of the handle is substantially parallel to that of the second body, and an extension direction of the stirring head is substantially perpendicular to that of the second body; and the mounting opening is located on a side wall of the handle facing away from the stirring head, and the mounting cavity extends from an interior of the handle to an interior of the second body.

In an embodiment, two of the second engaging portions are spaced apart on the side wall of the battery pack along the mounting direction, and in the two second engaging portions, the one located at a front end in the mounting direction is configured to adapt to the first engaging portion of the stirrer.

In an embodiment, the handle and the second body are connected through a connecting portion, an extension direction of the connecting portion is substantially perpendicular to that of the second body, and the mounting cavity is at least distributed in the handle and the connecting portion; and
a ratio of a radial dimension of the battery pack to a dimension of the connecting portion along a radial direction of the battery pack ranges from 0.63 to 0.96, and a ratio of an axial dimension of the battery pack to a sum of dimensions of the handle, the connecting portion, and the second body along an axial direction of the battery pack ranges from 0.5 to 0.7.

In an embodiment, the body is a handheld cooking machine, the handheld cooking machine includes a third body, and a grinding head capable of being driven by a motor to perform grinding and crushing; and the mounting cavity is located inside the third body, an end of the third body is connected to the grinding head, and the other end of the third body is provided with the mounting opening in an extension direction thereof.

In an embodiment, two of the second engaging portions are spaced apart on the side wall of the battery pack along the mounting direction, and in the two second engaging portions, the one located at a front end in the mounting direction is configured to adapt to the first engaging portion in the handheld cooking machine.

In an embodiment, a ratio of a radial dimension of the battery pack to a dimension of the third body along a radial direction of the battery pack ranges from 0.62 to 0.95, and a ratio of an axial dimension of the battery pack to a dimension of the third body along an axial direction of the battery pack ranges from 0.1 to 0.3.

In an embodiment, the kitchen appliance includes a display screen configured to display remaining power of the battery pack, the display screen is provided on the body.

In an embodiment, the battery pack includes a display screen configured to display remaining power, with a direction in which the battery pack moves into the mounting cavity through the mounting opening as a mounting direction, the display screen is located at a rear end of the battery pack along the mounting direction.

In an embodiment, with the direction in which the battery pack moves into the mounting cavity through the mounting opening as the mounting direction, the rear end of the battery pack along the mounting direction protrudes from a surface of the body or is coplanar with the surface of the body.

In an embodiment, with a direction in which the battery pack moves into the mounting cavity through the mounting opening as a mounting direction, a contour of a projection of the mounting cavity along the mounting direction coincides with an outer contour of a projection of the battery pack along the mounting direction.

In an embodiment, the battery pack includes an attachment portion, the attachment portion is located on at least a partial area of the side wall of the battery pack along the mounting direction, and in the mounted state, the attachment portion is attached to a cavity wall of the mounting cavity.

In an embodiment, the battery pack includes a housing and three battery cells provided in the housing, and with a direction in which the battery pack moves into the mounting cavity through the mounting opening as a mounting direction, lines connecting centers of projections of the three battery cells along the mounting direction form a triangle.

In an embodiment, the lines connecting the centers of the projections of the three battery cells along the mounting direction form an equilateral triangle.

In an embodiment, the housing includes a first shell portion and a second shell portion arranged sequentially along the mounting direction, a circuit board is mounted in the first shell portion, and the battery cell is mounted in the second shell portion; and
a dimension of the first shell portion along the mounting direction is L1, and a dimension of the second shell portion along the mounting direction is L2, where 0.2≤L1/L2≤0.4.

In an embodiment, the first shell portion and the second shell portion are connected by a threaded fastener; and/or the first shell portion is engaged with the second shell portion.

In an embodiment, the first shell portion is provided with a plurality of hooks spaced apart along a circumferential direction of the battery pack, the second shell portion is provided with a plurality of locking blocks spaced apart along the circumferential direction of the battery pack, and the plurality of locking blocks are snapped into the plurality of hooks in one-to-one correspondence; and
the first shell portion is provided with a plurality of connecting posts spaced apart along the circumferential direction of the battery pack, and the connecting posts extend into the second shell portion and are connected to the second shell portion by the threaded fastener.

In an embodiment, a front end of the second shell portion along the mounting direction is provided with a female terminal, the body is provided with a male terminal, and the female terminal is plugged into the male terminal to achieve an electrical connection between the battery pack and the body.

In an embodiment, the kitchen appliance includes a charging base, the battery pack is detachably connected to the charging base, and the battery pack separated from the body is capable of being connected to the charging base for charging.

In the above kitchen appliance, the battery pack is detachably connected to the body. Therefore, if the power of the battery pack is insufficient, a user may remove the battery pack and replace it with a fully charged battery pack to prolong the battery life of the kitchen appliance. Moreover, since the battery pack is detachable, the battery pack has a possibility of adapting to different types of bodies, and has high versatility. In the dismounted state, after the battery pack is separated from the body, the mounting cavity is exposed to the surface of the body. In the mounted state, an end of the battery pack is exposed through the mounting opening. Therefore, after the battery pack is mounted to the body, an end of the battery pack adjacent to the mounting opening is not shielded by additional components such as a cover, so that an overall structure of the kitchen appliance is simpler, steps of mounting and dismounting the cover are omitted when the battery pack is mounted and dismounted, and the operation is more convenient when the battery pack is required to be replaced, which further ensures that the operation of replacing the battery pack to prolong the battery life can be performed smoothly.

### BRIEF DESCRIPTION OF THE DRAWINGS

FIG. 1 is a schematic structural view of a kitchen appliance according to an embodiment of the present disclosure (a body is a vegetable cutter).
FIG. 2 is a schematic perspective view of the kitchen appliance according to another embodiment of the present disclosure (a body is a stirrer).
FIG. 3 is a schematic perspective view of the kitchen appliance according to yet another embodiment of the present disclosure (a body is a handheld cooking machine).
FIG. 4 is a schematic perspective view of a battery pack according to an embodiment of the present disclosure.
FIG. 5 is a schematic perspective view of the battery pack of FIG. 4 from another aspect.
FIG. 6 is a front view of the battery pack of FIG. 4 according to an embodiment of the present disclosure.
FIG. 7 is a top view of the battery pack of FIG. 4 according to an embodiment of the present disclosure.
FIG. 8 is a distribution view (top view) of positions of a motor and a battery pack in the kitchen appliance of FIG. 1.
FIG. 9 is a distribution view (top view) of positions of a motor and a battery pack in the kitchen appliance of FIG. 1.
FIG. 10 is an exploded view of the battery pack of FIG. 4.
FIG. 11 is a schematic perspective view of a second shell portion of the battery pack of FIG. 4.
FIG. 12 is a schematic perspective view of a charging base according to an embodiment of the present disclosure.
FIG. 13 is a schematic view of a battery pack and a locking structure in a vegetable cutter according to an embodiment of the present disclosure.
FIG. 14 is a schematic view of the battery pack and the locking structure in the vegetable cutter of FIG. 13 from another aspect.
FIG. 15 is a cross-sectional view of the locking structure in the vegetable cutter of FIG. 13.
FIG. 16 is a schematic view of the battery pack and the locking structure in the vegetable cutter according to another embodiment of the present disclosure.
FIG. 17 is a schematic perspective view of the battery pack and a second locking member of FIG. 16.
FIG. 18 is a schematic view of an internal structure of a mounting sleeve of FIG. 16.
FIG. 19 is a schematic perspective view of a limiting member and a second locking member of FIG. 16.
FIG. 20 is a schematic view of positions of a limiting member and a second locking member of FIG. 16 when the battery pack is not mounted.
FIG. 21 is a schematic view of positions of a limiting member and a second locking member of FIG. 16 when the battery pack is mounted in place.
FIG. 22 is a schematic view of positions of a limiting member and a second locking member of FIG. 16 when the battery pack is not disassembled.
FIG. 23 is a schematic view of positions of a limiting member and a second locking member of FIG. 16 when the battery pack is disassembled.

Reference numerals:
battery pack 100, first shell portion 110, hook 111, connecting post 112, second shell portion 120, locking block 121, connecting sleeve 122, through groove 123, protruding ring 124, first protrusion 125, second protrusion 126, battery cell 130, slot 131, locking block 140;
vegetable cutter 200, base 210, first mounting cavity 211, first body 220, motor 230, first locking member 240, engaging block 241, second sloping surface 242, button 250, first sloping surface 251, extension arm 252, mounting rack 260, first sliding groove 261, second sliding groove 262, second locking member 270, third engaging portion 271, fourth engaging portion 272, engaging groove 273, first limiting groove 274, second limiting groove 275, second limiting surface 2751, limiting portion 276, first limiting surface 2761, locking groove 2762, receiving groove 277, mounting sleeve 280, third sliding groove 281, limiting member 290, main body section 291, free end 292, second elastic member 2100;
stirrer 300, second body 310, handle 320, stirring head 330, second mounting cavity 340, connecting portion 350;
handheld cooking machine 400, third body 410, third mounting cavity 411, grinding head 420;
charging base 500, charging interface 510.

### DETAILED DESCRIPTION OF THE EMBODIMENTS

In order to make the above objectives, features and advantages of the present disclosure more obvious and understandable, specific implementations of the present disclosure are described in detail below with reference to the accompanying drawings. In the following description, many specific details are set forth in order to fully understand the present disclosure. However, the present disclosure can be implemented in many other ways different from those described herein, and those skilled in the art can make similar improvements without departing from the connotation of the present disclosure. Therefore, the present disclosure is not limited by specific embodiments disclosed below.

In the description of the present disclosure, it should be understood that the orientation or position relationships indicated by the terms "central", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", etc. are based on the orientation or position relationships shown in the accompanying drawings and are intended to facilitate the description of the present disclosure and simplify the description only, rather than indicating or implying that the apparatus or element referred to must have a particular orientation or be constructed and operated in a particular orientation, and therefore are not to be interpreted as limiting the present disclosure.

In addition, the terms "first" and "second" are used for descriptive purposes only, which cannot be construed as indicating or implying a relative importance or implicitly specifying the number of the indicated technical features. Thus, the features defined with "first" and "second" may explicitly or implicitly include at least one feature. In the description of the present disclosure, "a plurality of' means at least two, such as two or three, unless specifically stated otherwise.

In the present disclosure, unless otherwise specifically stated and limited, the terms "mount", "join", "connect", "fix", etc. should be understood in a broad sense, such as, a fixed connection, a detachable connection, or an integral connection; a mechanical connection, or an electrical connection; a direct connection, an indirect connection through an intermediate medium, internal communication between two elements, or an interaction of two elements, unless otherwise expressly defined. For those of ordinary skill in the art, the specific meanings of the foregoing terms in the present invention can be understood on a case-by-case basis.

In the present disclosure, unless otherwise explicitly specified and defined, a first feature being "on" or "under" a second feature may be a case that the first feature is in direct contact with the second feature, or the first feature is in indirect contact with the second feature via an intermediate medium. Furthermore, the first feature being "over", "above" and "on top of" the second feature may be a case that the first feature is directly above or obliquely above the second feature, or only means that the level of the first feature is higher than that of the second feature. The first feature being "below", "underneath" or "under" the second feature may be a case that the first feature is directly underneath or obliquely underneath the second feature, or only means that the level of the first feature is lower than that of the second feature.

It should be noted that when one element is referred to as "fixed to" or "arranged on" another element, it may be directly disposed on the another element or an intermediate element may exist. When one element is considered to be "connected to" another element, it may be directly connected to the another element or an intermediate element may co-exist. The terms "vertical", "horizontal", "up", "down", "left", "right" and similar expressions used herein are for illustrative purposes only, and do not represent unique embodiments.

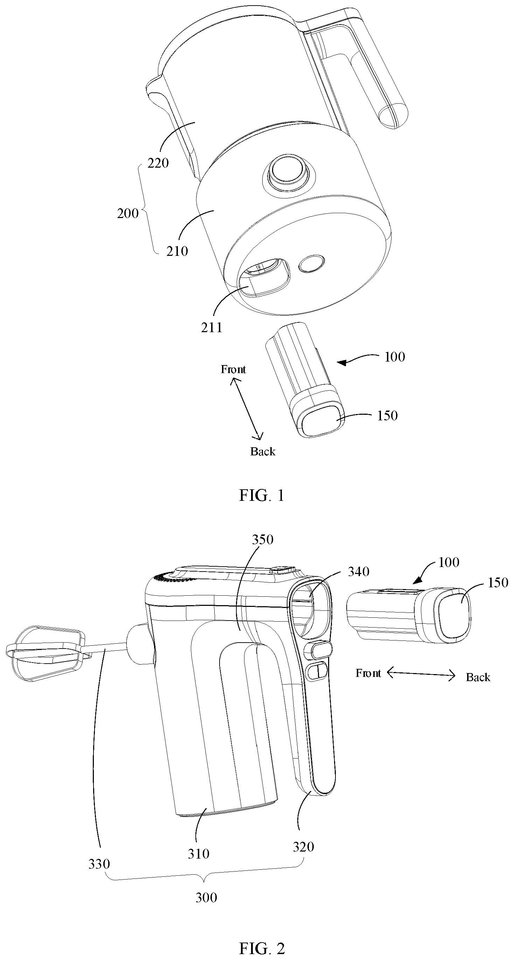

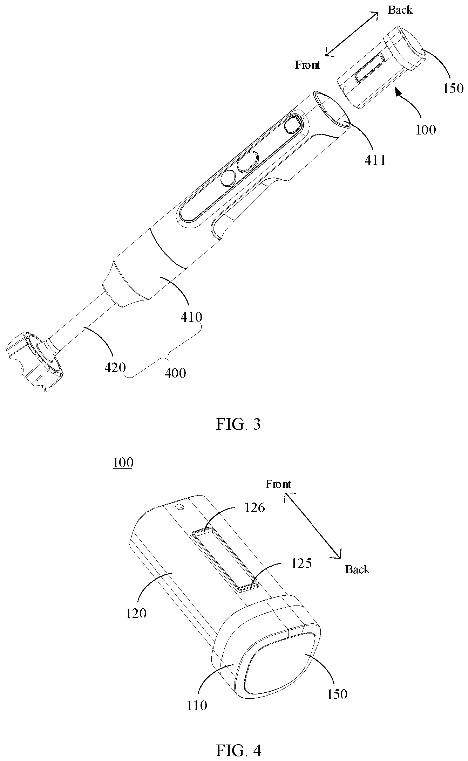

FIG. 1 is a schematic perspective view of a kitchen appliance according to an embodiment of the present disclosure (a body is a vegetable cutter). FIG. 2 is a schematic perspective view of the kitchen appliance according to another embodiment of the present disclosure (a body is a stirrer). FIG. 3 is a schematic perspective view of the kitchen appliance according to yet another embodiment of the present disclosure (a body is a handheld cooking machine). FIG. 4 is a schematic perspective view of a battery pack according to an embodiment of the present disclosure.

Referring to FIG. 1 to FIG. 4, a kitchen appliance according to an embodiment of the present disclosure includes a body and a battery pack 100. A mounting cavity is provided in the body, and the mounting cavity has a mounting opening located on a surface of the body. The battery pack 100 is detachably connected to the body. The battery pack 100 has a mounted state and a dismounted state. In the dismounted state, the battery pack 100 can be moved into or out of the mounting cavity through the mounting opening, and after the battery pack 100 is separated from the body, the mounting cavity is exposed to the surface of the body. In the mounted state, the battery pack 100 is mounted in the mounting cavity, and an end of the battery pack 100 is exposed through the mounting opening. In FIG. 1, the body is a vegetable cutter 200, the mounting cavity is a first mounting cavity 211, and the mounting opening is a first mounting opening. In FIG. 2, the body is a stirrer 300, the mounting cavity is a second mounting cavity 340, and the mounting opening is a second mounting opening. In FIG. 3, the body is a handheld cooking machine 400, the mounting cavity is a third mounting cavity 411, and the mounting opening is a third mounting opening.

In the present disclosure, the battery pack 100 is detachably connected to the body. Therefore, if the power of the battery pack 100 is insufficient, a user may remove the battery pack 100 and replace it with a fully charged battery pack 100 to prolong the battery life of the kitchen appliance. Moreover, since the battery pack 100 is detachable, the battery pack 100 has a possibility of adapting to different types of bodies, and has high versatility. For example, the battery pack 100 may be mounted to the vegetable cutter 200 shown in FIG. 1, or the stirrer 300 shown in FIG. 2, or the handheld cooking machine 400 shown in FIG. 3. In the dismounted state, after the battery pack 100 is separated from the body, the mounting cavity is exposed to the surface of the body. In the mounted state, an end of the battery pack 100 is exposed through the mounting opening. Therefore, after the battery pack 100 is mounted to the body, an end of the battery pack 100 adjacent to the mounting opening is not shielded by additional components such as a cover, so that an overall structure of the kitchen appliance is simpler, steps of mounting and dismounting the cover are omitted when the battery pack 100 is mounted and dismounted, and the operation is more convenient when the battery pack 100 is required to be replaced, which further ensures that the operation of replacing the battery pack 100 to prolong the battery life can be performed smoothly.

Specifically, the body may be the vegetable cutter 200, the stirrer 300, or the handheld cooking machine 400, or may be a juice extractor, a meat grinder, or the like. The battery pack 100 may be mounted in any of the above bodies. That is, a plurality of bodies may share one battery pack 100, which has high versatility. The battery pack 100 is mounted at different positions of the above bodies, and specific positions are described in the following embodiments.

In some embodiments, the body includes a first engaging portion, and the battery pack 100 includes a second engaging portion. In the mounted state, the first engaging portion is engaged with the second engaging portion. Specifically, in the first engaging portion and the second engaging portion, one is a protrusion, and the other is a groove or a hook. The position locking between the battery pack 100 and the body is achieved by snapping the protrusion into the groove or the hook. Alternatively, both the first engaging portion and the second engaging portion are protrusions, and the position locking between the battery pack 100 and the body is achieved through the mutual engagement of the two protrusions. Specific structures of the first engaging portion and the second engaging portion are not limited, and common engaging structures are applicable to the present disclosure.

Referring to FIG. 4, further, in some embodiments, the battery pack 100 includes a plurality of second engaging portions, and the plurality of second engaging portions are configured to adapt to the first engaging portions in the bodies of different types, respectively. Shapes and sizes of various types of bodies are different, positions where the battery pack 100 is mounted on the various types of bodies are also different, and positions of the first engaging portion arranged in the various types of bodies are also different. Therefore, the battery pack 100 is provided with the plurality of second engaging portions, so that the battery pack 100 can adapt to the first engaging portions on different bodies, therefore the bodies can share one battery pack 100.

Continuing to refer to FIG. 4, further, in some embodiments, with a direction in which the battery pack 100 moves into the mounting cavity through the mounting opening as a mounting direction, the plurality of second engaging portions are spaced apart on a side wall of the battery pack 100 along the mounting direction. Specifically, the battery pack 100 moves into the mounting cavity on the body from back to front as shown in the drawings to achieve mounting. That is, the mounting direction is from back to front. The battery pack 100 moves out of the mounting cavity on the body in a direction from front to back to achieve dismounting. In the embodiments shown in the drawings, the second engaging portion is provided in the form of a protrusion, and the battery pack 100 includes a first protrusion 125 and a second protrusion 126 spaced apart along the mounting direction. Both the first protrusion 125 and the second protrusion 126 are located on an outer side wall of the battery pack 100. Certainly, in other embodiments, the first protrusion 125 and the second protrusion 126 may be provided at other positions on the battery pack 100, for example, provided on a front-end wall. In other embodiments, more protrusions may be provided, for example, three or four. Each protrusion is configured to engage with the first engaging portion of one or more types of bodies.

In some other embodiments, the battery pack 100 may be detachably connected to the body through magnetic fixation or threaded-fastener fixation, etc. Certainly, other common detachable connection structures are also available.

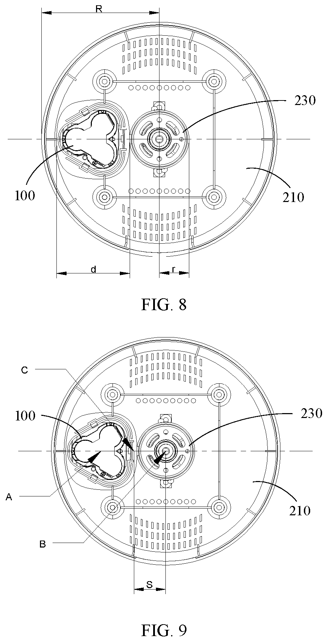

FIG. 8 is a distribution view (top view) of positions of a motor and a battery pack in the kitchen appliance of FIG. 1.

Referring to FIG. 1, FIG. 4, and FIG. 8, in some embodiments, the body is a vegetable cutter 200, a juice extractor, or a meat grinder, and the body includes a base 210 and a first body 220. The first body 220 is detachably connected to the base 210, and a motor 230 is mounted in the base 210. The first body 220 includes a working chamber, a cutting member is mounted in the working chamber, and the cutting member is configured to be driven by the motor 230 to rotate for cutting. The first mounting cavity 211 is located in the base 210, and the first mounting opening is located on a bottom surface of the base 210. Specifically, after being mounted in the first mounting cavity 211, the battery pack 100 can supply power to the motor 230, so that the motor 230 can drive a cutting member to rotate. In the embodiment shown in FIG. 1, when the vegetable cutter 200 is in use, the first body 220 is placed above the base 210, the mounting direction (from back to front) is from bottom to up, and the battery pack 100 has a maximum dimension in the mounting direction. The first mounting cavity 211 extends upwards from the bottom surface of the base 210, and a bottom end of the first mounting cavity 211 forms the first mounting opening. The battery pack 100 can move into the first mounting cavity 211 from bottom to top for mounting, and can move out of the first mounting cavity 211 from top to bottom for dismounting. A structure of the juice extractor or the meat grinder is similar to that of the vegetable cutter 200 and will not be repeated herein.

In this embodiment, since the battery pack 100 is mounted into the first mounting cavity 211 through the first mounting opening on the bottom surface of the base 210, when the kitchen appliance is in use, the first mounting opening faces a bearing surface for bearing the kitchen appliance. After the battery pack 100 is mounted in place, the first mounting opening and the battery pack 100 mounted through the first mounting opening are not exposed during the use of the kitchen appliance, which is safer and more aesthetically pleasing. Therefore, there is no need to provide an additional cover to shield the battery pack 100, the cost is reduced, structural complexity can be reduced, and the operation of replacing the battery pack 100 is simpler. Moreover, since the battery pack 100 has the maximum dimension in the mounting direction, and the mounting direction is parallel to an axial direction of base 210, a radial dimension of the base 210 required by the battery pack 100 is small. There is no need to expand the radial dimension of the base 210 in order to accommodate the battery pack 100, which is conducive to a miniaturization design of the kitchen appliance, so that there is a relatively low requirement for a corresponding placement space of the kitchen appliance.

Referring to FIG. 1 and FIG. 4, further, in some embodiments, two of the second engaging portions are spaced apart on the side wall of the battery pack 100 along the mounting direction. In the two second engaging portions, the one located at a rear end in the mounting direction is configured to adapt to the first engaging portion of the vegetable cutter 200, the juice extractor, or the meat grinder. Specifically, the first protrusion 125 and the second protrusion 126 are spaced apart on the side wall of the battery pack 100 along the mounting direction. The first protrusion 125 is configured to adapt to the first engaging portion of the vegetable cutter 200, the juice extractor, or the meat grinder.

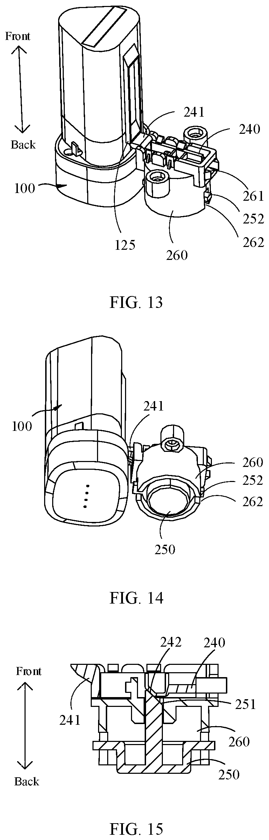

FIG. 13 is a schematic view of a battery pack and a locking structure in a vegetable cutter according to an embodiment of the present disclosure. FIG. 14 is a schematic view of the battery pack and the locking structure in the vegetable cutter of FIG. 13 from another aspect. FIG. 15 is a cross-sectional view of the locking structure in the vegetable cutter of FIG. 13.

Referring to FIG. 13 to FIG. 15, in some embodiments, when the body is the vegetable cutter 200, the first engaging portion is an engaging block 241, the engaging block 241 is engaged with the first protrusion 125 to realize dismounting and mounting of the battery pack 100 and the vegetable cutter 200.

Referring to FIG. 1 and FIG. 13 to FIG. 15, in some embodiments, the vegetable cutter 200 includes a first locking member 240, a button 250, and a first elastic member. The button 250 is exposed through the bottom surface of the base 210. The button 250 includes a first sloping surface 251, and the first locking member 240 includes a second sloping surface 242. The first elastic member abuts against the first locking member 240, so that the second sloping surface 242 is attached to the first sloping surface 251. The first elastic member is configured to push one of the two second engaging portions, which is located at the rear end in the mounting direction, to be relatively close to the first engaging portion through an elastic force of the first elastic member, and specifically, push the engaging block 241 to be relatively close to the first protrusion 125. The button 250 is capable of moving towards the first locking member 240, so that the first sloping surface 251 abuts against the second sloping surface 242 to push one of the two second engaging portions, which is located at the rear end in the mounting direction, to be relatively away from the first engaging portion, and specifically, push the engaging block 241 to be relatively away from the first protrusion 125. A direction in which the engaging block 241 and the first protrusion 125 are away from each other is perpendicular to a moving direction of the button 250.

Specifically, from the view angles of FIG. 13 and FIG. 15, the engaging block 241 is located at a left end of the first locking member 240, and the first protrusion 125 is located on a right outer side wall of the battery pack shell 210. The button 250 is exposed through the bottom surface of the base 210, and a shape and a size of the second sloping surface 242 corresponds to that of the first sloping surface 251, so that the two can be attached to each other. One end of the first elastic member is connected to the first locking member 240, and the other end of the first elastic member is directly or indirectly connected to the base 210. The position of the first elastic member is not limited, as long as the first elastic member can abut against the first locking member 240 through the elastic force of the first elastic member, so that the first locking member 240 has a tendency to move close to the battery pack 100, and at the same time, the first elastic member can abut against the first locking member 240 through the elastic force of the first elastic member, so that the second sloping surface 242 of the first locking member 240 has a tendency to move towards the first sloping surface 251 to achieve attaching. When the button 250 is pressed upwards, the first sloping surface 251 will abut against the second sloping surface 242, thereby pushing the first locking member 240 to move in a direction away from the first protrusion 125 (i.e., towards the right), so that the engaging block 241 is separated from the first protrusion 125 to achieve unlocking. When the button 250 is released, the first locking member 240 moves in a direction close to the first protrusion 125 (i.e., towards the left) under a resilience force of the first elastic member, so that the engaging block 241 is engaged with the first protrusion 125 to achieve locking. At the same time, when the first locking member 240 moves towards the left, the second sloping surface 242 abuts against the first sloping surface 251 to push the button 250 to move downwards and reset. In this embodiment, through cooperation of the sloping surfaces, vertical movement of the button 250 is converted into horizontal movement of the engaging block 241, so as to achieve unlocking or locking. Through this structure, the button 250 is provided on the base 210, so that the button 250 will not be exposed during use, which can prevent the battery pack 100 from falling out and power off due to accidental touch of the button 250 in a working state.

In some embodiments, a stroke of the button 250 moving up and down is 2.5mm. A stroke of the first locking member 240 moving left and right is 3mm. An amount of interference between the engaging block 241 and the first protrusion 125 in a moving direction of the first locking member 240 is 2mm.

Continuing to refer to FIG. 13 to FIG. 15, in some embodiments, the vegetable cutter 200 includes a mounting rack 260 fixedly mounted to the base 210. The button 250 and the first locking member 240 are both slidably connected to the mounting rack 260. The first elastic member is provided between the first locking member 240 and the mounting rack 260. Specifically, the mounting rack 260 is provided with a first sliding groove 261 extending horizontally, and the first locking member 240 is mounted in the first sliding groove 261. When the button 250 is pressed upwards, the first locking member 240 slides rightward in the first sliding groove 261. When the button 250 is released, driven by the resilience force of the first elastic member, the first locking member 240 slides leftward in the first sliding groove 261. The sliding of the first locking member 240 can be guided by the first sliding groove 261, so that the movement of the first locking member 240 is more stable. Meanwhile, the sliding of the first locking member 240 can be limited, so that the first locking member 240 has an appropriate sliding stroke. The mounting rack 260 is further provided with a second sliding groove 262 extending vertically. A main body portion of the button 250 configured to be pressed is mounted in an inner cavity of the mounting rack 260. An extension arm 252 of the button 250 connected to a side wall of the main body portion thereof extends into the second sliding groove 262. When the button 250 is pressed upwards, the extension arm 252 slides upwards in the second sliding groove 262. When the button 250 is released, under the resilience force of the first elastic member, the button 250 moves downwards and resets, and the extension arm 252 slides downwards in the second sliding groove 262. The sliding of the button 250 can be guided by the second sliding groove 262, so that the movement of the button 250 is more stable. Meanwhile, the sliding of the button 250 can be limited, so that the button 250 slides upwards until the button 250 is blocked by a top wall of the second sliding groove 262 and reaches an upper-limit position.

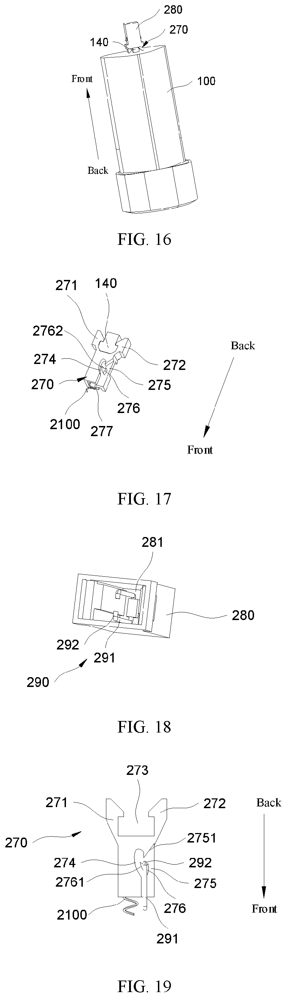

Referring to FIG. 16, in some embodiments, the battery pack 100 has a first depth and a second depth extending into the first mounting cavity 211 through the mounting opening, and the second depth is greater than the first depth. When the battery pack 100 extends into the first depth through the mounting opening, the battery pack 100 is in the mounted state. When the battery pack 100 moves from the first depth to the second depth, the battery pack 100 switches to the dismounted state. Specifically, when the battery pack 100 is not mounted, the battery pack 100 is pushed upwards into the first mounting cavity 211, and after being pushed to the first depth, the battery pack 100 will be automatically locked and switch to the mounted state. In the mounted state, the battery pack 100 is continuously pushed upwards, and after being pushed to the second depth, the battery pack 100 will switch to the dismounted state and can exit the first mounting cavity 211 downwards.

Referring to FIG. 16 and FIG. 17, in some embodiments, the vegetable cutter 200 includes a second locking member 270 and a limiting member 290. In the dismounted state, the battery pack 100 is configured to move towards the first mounting cavity 211 and push the second locking member 270 to move simultaneously until the battery pack 100 is engaged with and fixed to the second locking member 270, and the second locking member 270 is limited by the limiting member 290 to maintain the mounted state. In the mounted state, the battery pack 100 is configured to move further into the first mounting cavity 211 and push the second locking member 270 to move simultaneously, so that the second locking member 270 is disengaged from the limiting of the limiting member 290, thereby separating the battery pack 100 from the second locking member 270. Specifically, when the battery pack 100 is not mounted, the battery pack 100 is pushed upwards into the first mounting cavity 211, and the second locking member 270 moves simultaneously therewith. After the battery pack 100 is pushed to a certain position, the second locking member 270 locks the position of the battery pack 100. At the same time, the second locking member 270 is limited to a current position by the limiting member 290, so as to maintain locking of the battery pack 100. In the mounted state, the battery pack 100 is continuously pushed upwards, and the second locking member 270 moves simultaneously therewith. After the battery pack 100 is pushed to a certain position, the second locking member 270 is separated from the limiting member 290, and the battery pack 100 and the second locking member 270 can move in opposite directions. When moving to a certain position, the battery pack 100 is separated from the second locking member 270 to realize unlocking.

Referring to FIG. 16 to FIG. 19, specifically, in some embodiments, the vegetable cutter 200 includes a mounting sleeve 280. The limiting member 290 is connected to the mounting sleeve 280. A third sliding groove 281 is provided in the mounting sleeve 280. The second locking member 270 extends into the third sliding groove 281, and a second elastic member 2100 is provided between the second locking member 270 and the mounting sleeve 280. The second locking member 270 is provided with a limiting portion 276, and the battery pack 100 includes a locking block 140. In the dismounted state, when the battery pack 100 is pressed, the second locking member 270 slides into the third sliding groove 281 along the mounting direction under abutment of the locking block 140 and gradually closes under limiting of the third sliding groove 281, and when the pressing of the battery pack 100 is stopped, the second locking member 270 is driven by the second elastic member 2100 to slide out of the third sliding groove 281 along a direction opposite to the mounting direction until the second locking member 270 holds the locking block 140 tightly when the limiting member 290 locks the limiting portion 276. That is, the mounting of the battery pack 100 is completed. In the mounted state, when the battery pack 100 is pressed, the second locking member 270 slides into the third sliding groove 281 along the mounting direction under abutment of the locking block 140, so that the limiting member 290 is separated from the limiting portion 276, and when the pressing of the battery pack 100 is stopped, the second locking member 270 is driven by the second elastic member 2100 to slide out of the third sliding groove 281 along the direction opposite to the mounting direction and gradually opens, no longer holding the locking block 140 tightly until the second locking member 270 is separated from the locking block 140. That is, the dismounting of the battery pack 100 is completed.

Referring to FIG. 17 to FIG. 23, specifically, the mounting sleeve 280 is fixedly mounted on the base 210 and extends into the first mounting cavity 211. The second locking member 270 includes a third engaging portion 271 and a fourth engaging portion 272, and an engaging groove 273 is defined between the third engaging portion 271 and the fourth engaging portion 272. The locking block 140 is connected to a top end of the battery pack 100. The third engaging portion 271 and the fourth engaging portion 272 are made of a material with certain elasticity. The third engaging portion 271 and the fourth engaging portion 272 are in an open state when located outside the third sliding groove 281 of the mounting sleeve 280, a size of the formed engaging groove 273 is much greater than that of the locking block 140, and the locking block 140 cannot be stuck. When the battery pack 100 is pressed upwards, the locking block 140 may abut against a groove wall of the engaging groove 273, so that the second locking member 270 slides upwards into the third sliding groove 281, and the third engaging portion 271 and the fourth engaging portion 272 may gradually close under the limiting of the third sliding groove 281, so that the engaging groove 273 gradually holds the locking block 140 tightly, thereby fixedly connecting the battery pack 100 to the second locking member 270. When the second locking member 270 slides downwards until the third engaging portion 271 and the fourth engaging portion 272 are disengage from the third sliding groove 281, the third engaging portion 271 and the fourth engaging portion 272 are no longer limited by the third sliding groove 281 and may open and reset under respective resilience forces, thereby unlocking the battery pack 100. Preferably, along the mounting direction, widths of the third engaging portion 271 and the fourth engaging portion 272 gradually decrease. In this way, a width of a joint between the third engaging portion 271 and the fourth engaging portion 272 and a main body portion of the second locking member 270 can be smaller, which facilitates opening and closing of the third engaging portion 271 and the fourth engaging portion 272.

As described above, the third engaging portion 271 and the fourth engaging portion 272 gradually close under the limiting of the third sliding groove 281, so that the engaging groove 273 gradually holds the locking block 140 tightly, thereby fixedly connecting the battery pack 100 to the second locking member 270. In the process, in addition to the engaging groove 273 holds the locking block 140 tightly, the second locking member 270 is also required to be limited, so that the second locking member 270 is kept at the current position and does not exit from the third sliding groove 281. As described above, the limiting portion 276 of the second locking member 270 is limited by the limiting member 290. Specifically, in some embodiment, the second locking member 270 is provided with a first limiting groove 274 and a second limiting groove 275 in communication with each other, and the first limiting groove 274 and the second limiting groove 275 are arranged around the limiting portion 276. When the battery pack 100 is mounted, the limiting member 290 moves in the first limiting groove 274. When the battery pack 100 is dismounted, the limiting member 290 moves in the second limiting groove 275. Specifically, an inlet of the first limiting groove 274 is in communication with an outlet of the second limiting groove 275, and an outlet of the first limiting groove 274 is in communication with an inlet of the second limiting groove 275. When the battery pack 100 is mounted, the limiting member 290 moves in the first limiting groove 274 until the limiting portion 276 is locked by the limiting member 290, and the second locking member 270 is fixed to the current position. When the battery pack 100 is dismounted, the limiting member 290 moves in the second limiting groove 275, the locking between the limiting portion 276 and the limiting member 290 is released, and the second locking member 270 is driven by the second elastic member 2100 to exit the third sliding groove281. In this way, movement paths of the limiting member 290 are different during the mounting and the dismounting, so that mounting and the dismounting independent of each other and performed more stably.

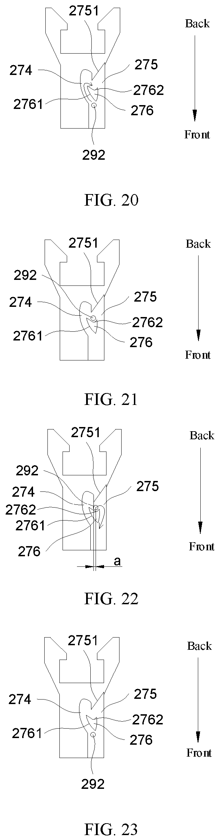

Further, in some embodiments, the limiting portion 276 is V-shaped to form a locking groove 2762, and the limiting portion 276 is provided with a first limiting surface 2761. When the battery pack 100 is in the dismounted state (the state shown in FIG. 20) and the battery pack 100 is pressed, the limiting member 290 may be attached to the first limiting surface 2761 to move relatively along the direction opposite to the mounting direction until the limiting member 290 moves beyond an end portion of the first limiting surface 2761. When the pressing of the battery pack 100 is stopped, driven by the second elastic member 2100, the limiting member 290 may move relatively along the mounting direction and be locked in the locking groove 2762 (the state shown in FIG. 21), so as to complete the limiting to the second locking member 270. Certainly, the limiting portion 276 may alternatively be U-shaped or in other similar shapes. With such the shape, the limiting member 290 is not easily separated from the locking groove 2762 after being locked into the locking groove 2762, resulting in better stability. The second limiting groove 275 further includes a second limiting surface 2751. When the battery pack 100 is in the mounted state (the state shown in FIG. 22) and the battery pack 100 is pressed, the limiting member 290 may move relatively along the direction opposite to the mounting direction and be separated from the locking groove 2762, thereby releasing the limiting to the second locking member 270. Next, the limiting member 290 may abut against the second limiting surface 2751 and be attached to the second limiting surface 2751 to move relatively along the direction opposite to the mounting direction. When the pressing of the battery pack 100 is stopped, driven by the second elastic member 2100, the limiting member 290 may move relatively along the mounting direction and reach the outlet of the second limiting groove 275 (the state shown in FIG. 23).

It should be noted that, in the foregoing process, the description is provided in a manner in which the limiting member 290 moves relative to the second locking member 270. In fact, an absolutely moving component is the second locking member 270. However, the limiting member 290 is required to be capable of swinging to adapt to a path change in a width direction of the first limiting groove 274 and the second limiting groove 275 (a horizontal direction in the view of FIG. 19).

Referring to FIG. 17 and FIG. 18, specifically, in some embodiments, the limiting member 290 is an elastic rod, including a main body section 291 and a free end 292, which are integrally connected. The main body section 291 is fixedly connected to a groove wall of the mounting sleeve 280. The free end 292 is bent relative to the main body section 291, and the free end 292 is locked in the locking groove 2762, so as to limit the position of the second locking member 270. The elastic rod has certain elasticity. During the movement in FIG. 20 to FIG. 21, when the free end 292 moves relatively along the first limiting surface 2761 in the direction opposite to the mounting direction until the free end 292 moves beyond the end portion of the first limiting surface 2761, the pressing of the battery pack 100 is stopped. Driven by the second elastic member 2100, the free end 292 may move relatively along the mounting direction. Under an elastic force of the elastic rod, the free end 292 may swing towards the right, thereby being locked in the locking groove 2762. During the movement in FIG. 22 to FIG. 23, when the free end 292 abuts against the second limiting surface 2751 and moves relatively, the pressing of the battery pack 100 is stopped. Driven by the second elastic member 2100, the free end 292 may move relatively along the mounting direction. Under the elastic force of the elastic rod, the free end 292 may swing towards the left, so as to slide along the second limiting groove 275 and reach the outlet of the second limiting groove 275. Certainly, in addition to using the elastic rod as the limiting member290, other similar materials capable of swinging maybe used, for example, a steel wire rope may be used as the limiting member 290.

In the above process, a current position state of the free end 292 may be judged by a feeling when the battery pack 100 is pressed. For example, during the movement in FIG. 20 to FIG. 21, when moving relatively along the first limiting surface 2761 in the direction opposite to the mounting direction, the free end 292 may scratch against the first limiting surface 2761, and a certain resistance can be felt at the time of pressing. When the free end 292 moves beyond the end portion of the first limiting surface 2761, the free end 292 no longer scratches against the first limiting surface 2761, and a sense of resistance decreases or even disappears. At this time, the battery pack 100 can be released. During the movement in FIG. 22 to FIG. 23, the free end 292 is separated from the locking groove 2762, and when the free end 292 abuts against the second limiting surface and moves relatively, the free end 292 may scratch against the second limiting surface 2751, and a certain resistance can be felt at the time of pressing. At this time, the battery pack 100 can be released.

Referring to FIG. 22, in some embodiments, when the free end 292 of the elastic rod is locked in the locking groove 2762, a starting end of the second limiting surface 2751 is located on a side of the limiting member 290 adjacent to the first limiting groove 274. That is, from the view of FIG. 22, the starting end of the second limiting surface 2751 is located on the left side of the free end 292, and a distance there between is a. In this way, when the battery pack 100 is in the mounted state (the state shown in FIG. 22) and the battery pack 100 is pressed, it may be ensured that the free end 292 can smoothly abut against the second limiting surface 2751 and move relatively in the second limiting groove 275 when the free end 292 moves relatively along the direction opposite to the mounting direction, thereby successfully completing the dismounting of the battery pack 100. If the free end 292 is cylindrical, a radius thereof is b, and preferably, a>1.5b, so as to prevent the free end 292 from returning to the first limiting groove 274 again and being locked in the locking groove 2762 again.

Referring to FIG. 18, in some embodiments, the elastic rod has two free ends 292, a front surface and a back surface of the second locking member 270 are each provided with a group of the limiting portion 276, the first limiting groove 274, and the second limiting groove 275, and each group cooperates with the free end 292 for limiting. In this way, the second locking member 270 can be limited more stably.

Referring to FIG. 17, in some embodiments, the second locking member 270 is provided with an accommodating groove 277, and the second elastic member 2100 is provided in the accommodating groove 277. An end of the second elastic member 2100 is fixedly connected to a groove wall of the accommodating groove 277, the other end of the second elastic member 2100 is fixedly connected to and abuts against the third sliding groove 281. When the second locking member 270 is driven outwards by a resilience force of the second elastic member 2100, since the second elastic member 2100 is fixedly connected to the groove wall of the accommodating groove 277, the second elastic member 2100 can be prevented from completely disengaging from the third sliding groove 281. A guide post may also be provided in the accommodating groove 277, and the second elastic member 2100 sleeves on the guide post to guide the second elastic member 2100.

Referring to FIG. 1 to FIG. 8, in some embodiments, outer contours of projections of the base 210, the motor 230, and the battery pack 100 along the mounting direction are all circular or quasi-circular, and the motor 230 is located at a central position of the working chamber along a radial direction of the base 210. A radius of the base 210 is R, a diameter of the battery pack 100 is d, and a radius of the motor 230 is r, R=K(d+r), where 1≤K≤1.2. Specifically, the quasi-circular shape maybe an approximately circular shape, such as a polygon or an ellipse, etc. In a plane perpendicular to the mounting direction, a projection of the motor 230 is located at a central position of a projection of the base 210. The motor 230 and the battery pack 100 are staggered on an axis of an output shaft of the motor 230. That is, the battery pack 100 is located on an outer side of the motor 230 along a radial direction of the base 210. When K=1 is satisfied, that is, R=d+r, a radial dimension of the base 210 can be minimized, which facilitates a miniaturization design of the kitchen appliance, so that there is a relatively low requirement for a corresponding placement space of the kitchen appliance.

FIG. 9 is a distribution view (top view) of positions of a motor and a battery pack in the kitchen appliance of FIG. 1.

Referring to FIG. 1 and FIG. 9, in some embodiments, in the mounted state, in a plane perpendicular to the mounting direction, a projection of a center of the battery pack 100 is a first position A, a projection of a center of the motor 230 is a second position B, and a projection of a center of gravity of the kitchen appliance is a third position C. The third position C is located on a line connecting the first position A and the second position B. When projections of mounting positions of the battery pack 100 and the motor 230 satisfy the above condition, a weight of the battery pack 100 and a weight of the motor 230 can be better balanced, so that the entire kitchen appliance has better stability after mounting and is not prone to shaking or toppling.

Continuing to refer to FIG. 1 and FIG. 9, preferably, in some embodiments, a distance between the second position B and the third position C is s, and a weight of the battery pack 100 is m, where 0.024≤s/m≤0.032. When the above range is satisfied, the weight of the battery pack 100 and the weight of the motor 230 can be further better balanced, so that the entire kitchen appliance has better stability after mounting and is not prone to shaking or toppling. Specifically, in some embodiments, the weight m of the battery pack 100 is 100g, and a weight of the kitchen appliance ranges from 1100g to 1500g before the battery pack 100 is mounted. The distance s between the second position B and the third position C ranges from 4.89mm to 6.39mm. Preferably, a distance between the first position A and the second position B ranges from 40mm to 45mm.

Referring to FIG. 2, in some embodiments, the body is a stirrer 300, the stirrer 300 includes a second body 310, a handle 320, and a stirring head 330 capable of being driven by a motor to perform stirring. A side of the second body 310 is connected to the handle 320, the other side of the second body 310 is connected to the stirring head 330, an extension direction of the handle 320 is substantially parallel to that of the second body 310, and an extension direction of the stirring head 330 is substantially perpendicular to that of the second body 310. The second mounting opening is located on a side wall of the handle 320 facing away from the stirring head 330, and the second mounting cavity 340 extends from an interior of the handle 320 to an interior of the second body 310. Specifically, "substantially perpendicular" means that an included angle ranges from 80 degrees to 90 degrees, and "substantially parallel" means that the included angle is no more than 10 degrees. The handle 320, the second body 310, and the stirring head 330 are arranged along the mounting direction, the handle 320 is connected to a rear side of the second body 310, and the stirring head 330 is connected to a front side of the second body 310. The second mounting opening is located on a rear side wall of the handle 320. The second mounting cavity 340 extends from interior of the handle 320 to the interior of the second body 310 along the mounting direction. After the battery pack 100 is mounted in place, a part of the battery pack 100 is located in the handle 320, and another part of the battery pack 100 is located in the second body 310.

Referring to FIG. 2 and FIG. 4, further, in some embodiments, two of the second engaging portions are spaced apart on the side wall of the battery pack 100 along the mounting direction, and in the two second engaging portions, the one located at a front end in the mounting direction is configured to adapt to the first engaging portion of the stirrer 300. Specifically, the first protrusion 125 and the second protrusion 126 are spaced apart on the side wall of the battery pack 100 along the mounting direction. The second protrusion 126 is configured to adapt to the first engaging portion of the stirrer 300. Certainly, in other embodiments, a position of the first engaging portion of the stirrer 300 may alternatively be adjusted in the design, so that the first protrusion 125 is configured to adapt to the first engaging portion of the stirrer 300.

Continuing to refer to FIG. 2 and FIG. 4, in some embodiments, the handle 320 and the second body 310 are connected through a connecting portion 350, an extension direction of the connecting portion 350 is substantially perpendicular to that of the second body 310, and the second mounting cavity 340 is at least distributed in the handle 320 and the connecting portion 350. A ratio of a radial dimension of the battery pack 100 to a dimension of the connecting portion 350 along a radial direction of the battery pack 100 ranges from 0.63 to 0.96. A ratio of an axial dimension of the battery pack 100 to a sum of dimensions of the handle 320, the connecting portion 350, and the second body 310 along an axial direction of the battery pack 100 ranges from 0.5 to 0.7. Specifically, the handle 320, the connecting portion 350, the second body 310, and the stirring head 330 are arranged along the mounting direction, and the handle 320 is connected to the rear side of the second body 310 through the connecting portion 350. The second mounting cavity 340 extends forward from the rear side wall of the handle 320 to the interior of the second body 310 through the connecting portion 350. That is, in the mounting direction, part of the second mounting cavity 340 is located in the handle 320, part of the second mounting cavity 340 is located in the connecting portion 350, and part of the second mounting cavity 340 is located in the second body 310. The axial direction of the battery pack 100 is parallel to the mounting direction, and the radial dimension of the battery pack 100 refers to a dimension perpendicular to the mounting direction. When the second mounting cavity 340 is provided in the manner described in the foregoing embodiments, a dimension of the connecting portion 350 in the radial direction of the battery pack 100 can be reduced as much as possible, so that the structure is more compact. At the same time, an internal space of the handle 320, the connecting portion 350, and the second body 310 along the axial direction of the battery pack 100 can be better utilized, and the structure can also be made more compact.

Referring to FIG. 3, in some embodiments, the body is a handheld cooking machine 400, and the handheld cooking machine 400 includes a third body 410, and a grinding head 420 capable of being driven by a motor to perform grinding and crushing. The third mounting cavity 411 is located inside the third body 410, an end of the third body 410 in an extension direction thereof is connected to the grinding head 420, and the other end of the third body 410 is provided with the third mounting opening. Specifically, the handheld cooking machine 400 is in a shape of a cylinder or a quasi-cylinder as a whole. The third body 410 and the grinding head 420 are arranged along the mounting direction, and the grinding head 420 is connected to a front end of the third body 410. A rear end wall of the third body 410 is provided with the third mounting opening, and the third mounting cavity 411 extends forward from the rear end wall of the third body 410.

Referring to FIG. 3 and FIG. 4, further, in some embodiments, two of the second engaging portions are spaced apart on the side wall of the battery pack 100 along the mounting direction, and in the two second engaging portions, the one located at a front end in the mounting direction is configured to adapt to the first engaging portion of the handheld cooking machine 400. Specifically, the first protrusion 125 and the second protrusion 126 are spaced apart on the side wall of the battery pack 100 along the mounting direction. The second protrusion 126 is configured to adapt to the first engaging portion of the handheld cooking machine 400.

Referring to FIG. 3 and FIG. 4, in some embodiments, a ratio of a radial dimension of the battery pack 100 to a dimension of the third body 410 along a radial direction of the battery pack 100 ranges from 0.62 to 0.96, and a ratio of an axial dimension of the battery pack 100 to an axial dimension of the second body 410 along an axial direction of the battery pack 100 ranges from 0.1 to 0.3. Specifically, the axial direction of the battery pack 100 is parallel to the mounting direction and an axial direction of the third body 410, the radial direction of the battery pack 100 refers to a direction perpendicular to the mounting direction, and a radial direction of the third body 410 refers to a direction perpendicular to the axial direction thereof. Compared with the manner in which the mounting direction is perpendicular to the axial direction of the third body 410, when the third mounting cavity 411 is arranged and the battery pack 100 is mounted in the manner shown in FIG. 3, since the third body 410 has a relatively large axial dimension, the internal space of the third body 410 can be fully utilized by mounting the battery pack 100 in this direction, and the radial dimension of the third body 410 is reduced as much as possible, which facilitates the miniaturization of the device and is more convenient for a user to hold..

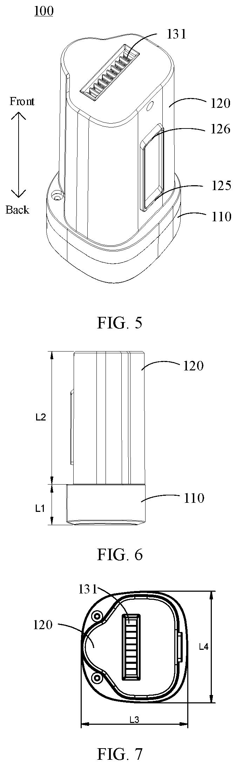

FIG. 5 is a schematic perspective view of the battery pack of FIG. 4 from another aspect.

Referring to FIG. 4 and FIG. 5, in some embodiments, the battery pack 100 includes a display screen configured to display remaining power, with a direction in which the battery pack 100 moves into the mounting cavity through the mounting opening as the mounting direction, the display screen is located at a rear end of the battery pack 100 along the mounting direction. After the battery pack 100 is mounted on the body, the rear end of the battery pack 100 is exposed through the mounting opening, so that the display screen arranged at the rear end can be directly exposed through the mounting opening, and the user can directly observe the power of the battery pack 100 without removing the battery pack 100. At the same time, since the display screen 150 is exposed through the mounting opening, the user can know the current power of the battery pack 100 in time, so that the battery pack 100 with insufficient power can be removed in time and replaced with a fully charged battery pack 100, and a situation where it is found that the power is insufficient after the kitchen appliance is taken out for use does not easily occur. In addition, since the user can know the current power of the battery pack 100 in time, the battery pack 100 with insufficient power can be removed in time and replaced with the fully charged battery pack 100, so that the battery pack 100 of the kitchen appliance is always in a state of sufficient power. When there is a need to carry out the kitchen appliance, the kitchen appliance can be taken out anytime. When the time is more urgent, there is no need to delay the time to check whether the power is sufficient and replace the battery pack 100 after the inspection that the power is insufficient. Certainly, in other embodiments, the display screen may alternatively protrude outwards from the side wall of the battery pack 100 along the radial direction of the battery pack 100. A contour of a projection of the battery pack 100 along the mounting direction is circular or quasi-circular, and the radial direction thereof is a direction perpendicular to the mounting direction.

Referring to FIG. 4 and FIG. 5, in some embodiments, with the direction in which the battery pack 100 moves into the mounting cavity through the mounting opening as the mounting direction, the rear end of the battery pack 100 along the mounting direction protrudes from a surface of the body or is coplanar with the surface of the body. Specifically, in the embodiment shown in FIG. 2, the rear end of the battery pack 100 along the mounting direction protrudes from the rear side wall of the handle 320 in the stirrer 300, so that the user can observe the power thereof. Similarly, in the embodiment shown in FIG. 3, the rear end of the battery pack 100 along the mounting direction protrudes from the rear end wall of the third body 410 of the handheld cooking machine 400. However, in the embodiment shown in FIG. 1, the rear end of the battery pack 100 along the mounting direction cannot exceed the bottom surface of the base 210 of the vegetable cutter 200, so as not to affect the placement of the vegetable cutter 200 on the bearing surface. Preferably, the rear end of the battery pack 100 along the mounting direction may be coplanar with the bottom surface of the base 210 of the vegetable cutter 200. Therefore, the battery pack 100 is also supported by the bearing surface, to hold up the battery pack 100. If the first engaging portion of the vegetable cutter 200 fails, since the battery pack 100 is supported by the bearing surface, the battery pack 100 can still be located in the first mounting cavity 211 without falling out.

In the above embodiments, the display screen is located at the rear end of the battery pack 100 along the mounting direction. In some other embodiments, the display screen may be provided on the body. Specifically, the display screen is mounted on the body, and a screen thereof is exposed to the surface of the body. After the battery pack 100 is mounted on the body and electrically connected, the display screen may display the remaining power of the battery pack 100. After the battery pack 100 is removed from the body, the display screen shows that the battery pack 100 is in a non-mounted state.

Referring to FIG. 1 to FIG. 4, in some embodiments, with the direction in which the battery pack 100 moves into the mounting cavity through the mounting opening as the mounting direction, a contour of a projection of the mounting cavity along the mounting direction coincides with an outer contour of a projection of the battery pack 100 along the mounting direction. Specifically, a maximum dimension of the mounting cavity in the radial direction of the battery pack 100 is equal to a maximum dimension of the battery pack 100 in the radial direction thereof. In this way, after the battery pack 100 is mounted in the mounting cavity, at least a partial area of the side wall of the battery pack 100 can be attached to the cavity wall of the mounting cavity, so that dust and liquid cannot easily enter the mounting cavity through a gap between the battery pack 100 and the cavity wall of the mounting cavity, thereby enhancing waterproof and dustproof performance.

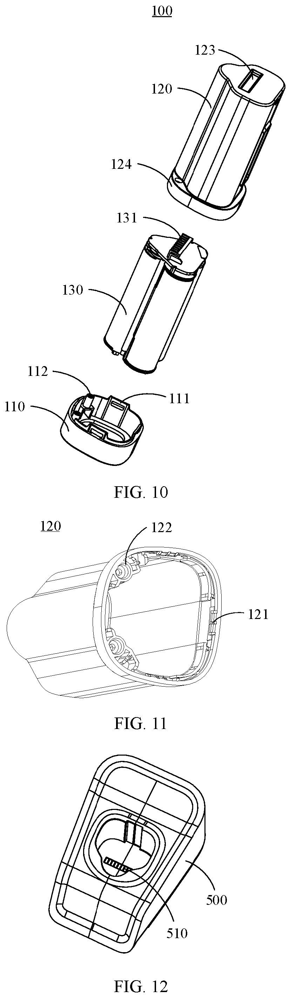

FIG. 10 is an exploded view of the battery pack of FIG. 4.

Referring to FIG. 4, FIG. 5, and FIG. 10, further, in some embodiments, the battery pack 100 includes an attachment portion, and the attachment portion is located on at least a partial area of the sidewall of the battery pack 100 along the mounting direction. In the mounted state, the attachment portion is attached to the cavity wall of the mounting cavity. Specifically, an upper area of an outer side wall of the battery pack 100 protrudes outwards along the radial direction of the battery pack 100, thereby forming the attachment portion. Along the radial direction of the battery pack 100, a dimension of the attachment portion is substantially equal to that of the mounting cavity. Further, an area of the outer side wall of the battery pack 100 adjacent to the rear end thereof protrudes outwards along the radial direction of the battery pack 100, thereby forming the attachment portion. In this way, the mounting cavity can be blocked at a position adjacent to the mounting opening, so that dust and liquid cannot enter the mounting cavity at all, and the waterproof and dustproof performance is better.

FIG. 6 is a front view of the battery pack of FIG. 4 according to an embodiment of the present disclosure, and FIG. 7 is a top view of the battery pack of FIG. 4 according to an embodiment of the present disclosure.

Referring to FIG. 4, FIG. 5, and FIG. 10, in some embodiments, the battery pack 100 includes a housing and three battery cells 130 provided in the housing, and with the direction in which the battery pack 100 moves into the mounting cavity through the mounting opening as the mounting direction, lines connecting centers of projections of the three battery cells 130 along the mounting direction form a triangle. The three battery cells 130 are distributed in a triangle, so that the battery cells 130 can be distributed more compactly in the radial direction of the battery pack 100, and the radial dimension of the battery pack 100 can be smaller. Therefore, the radial dimension of the base 210 of the vegetable cutter 200 shown in FIG. 1 is relatively small, and the radial dimension of the third body 410 of the handheld cooking machine 400 shown in FIG. 3 is relatively small. Referring to FIG. 5 to FIG. 7, the battery pack 100 is cylindrical or quasi-cylindrical, and the radial direction thereof is the direction perpendicular to the mounting direction. When the lines connecting the centers of the projections of the three battery cells 130 along the mounting direction form the triangle, the radial dimension of the battery pack 100 ranges from 38mm to 55mm. Preferably, the entire battery pack 100 has a length L4 of 47mm, a width L3 of 42mm, a sum of heights L1 and L2 of 96mm, and a housing wall thickness of 1.5mm.

It should be understood that, in some embodiments, the lines connecting the centers of the projections of the three battery cells 130 along the mounting direction form an equilateral triangle. In this case, the distribution of the three battery cells 130 in the radial direction of the battery pack 100 is more compact, and the radial dimension of the battery pack 100 is smaller.

FIG. 11 is a schematic perspective view of a second shell portion of the battery pack of FIG. 4.

Referring to FIG. 4, FIG. 10, and FIG. 11, in some embodiments, the housing includes a first shell portion 110 and a second shell portion 120 arranged sequentially along the mounting direction, a circuit board is mounted in the first shell portion 110, and the battery cell 130 is mounted in the second shell portion 120. Referring to FIG. 6, a dimension of the first shell portion 110 along the mounting direction is L1, and a dimension of the second shell portion 120 along the mounting direction is L2, where 0.2≤L1/L2≤0.4. When a ratio of the dimensions of the first shell portion 110 and the second shell portion 120 along the mounting direction satisfies the above condition, the dimension of the entire battery pack 100 along the mounting direction can be made smaller on the premise that there is enough space for mounting the battery cell 130 and the circuit board.

Specifically, the first shell portion 110 is detachably connected to the second shell portion 120. An area of an outer side wall of the second shell portion 120 adjacent to the first shell portion 110 protrudes outwards to form a protruding ring 124, and a radial dimension of an outer side wall of the protruding ring 124 is equal to a radial dimension of an outer side wall of the first shell portion 110. The outer side wall of the protruding ring 124 and the outer side wall of the first shell portion 110 cooperatively form the foregoing attachment portion.

Referring to FIG. 4, FIG. 10, and FIG. 11, in some embodiments, the first shell portion 110 and the second shell portion 120 are connected by a threaded fastener, and/or the first shell portion 110 is engaged with the second shell portion 120. Specifically, the first shell portion 110 may be connected to the second shell portion 120 through a threaded fastener such as a screw. Alternatively, the first shell portion 110 and the second shell portion 120 are fixedly mounted through engagement. Alternatively, the first shell portion 110 and the second shell portion 120 are fixedly mounted through the above two manners at the same time.

Referring to FIG. 4, FIG. 10, and FIG. 11, specifically, in some embodiments, the first shell portion 110 is provided with a plurality of hooks 111 spaced apart along a circumferential direction of the battery pack 100, the second shell portion 120 is provided with a plurality of locking blocks 121 spaced apart along the circumferential direction of the battery pack 100, and the plurality of locking blocks 121 are snapped into the plurality of hooks 111 in one-to-one correspondence. The first shell portion 110 is provided with a plurality of connecting posts 112 spaced apart along the circumferential direction of the battery pack 100, and the connecting posts 112 extend into the second shell portion 120 and are connected to the second shell portion 120 by the threaded fastener.

Specifically, the first shell portion 110 is provided with three hooks 111 spaced apart along the circumferential direction of the battery pack 100, and correspondingly, the second shell portion 120 is provided with three locking blocks 121 spaced apart along the circumferential direction of the battery pack 100. Each locking block 121 is correspondingly snapped into one hook 111. At the same time, the first shell portion 110 is provided with two connecting posts 112 spaced apart along the circumferential direction of the battery pack 100, and correspondingly, the second shell portion 120 is provided with two connecting sleeves 122 spaced apart along the circumferential direction of the battery pack 100. Each connecting post 112 correspondingly extends into one connecting sleeve 122, which are connected by a screw. In this embodiment, the first shell portion 110 and the second shell portion 120 are fixedly mounted through both engagement and threaded-fastener connection at the same time, which can improve firmness of the mounting.

Referring to FIG. 4, FIG. 10, and FIG. 11, in some embodiments, a front end of the second shell portion 120 along the mounting direction is provided with a female terminal, the body is provided with a male terminal, and the female terminal is plugged into the male terminal to achieve an electrical connection between the battery pack 100 and the body. Specifically, the female terminal is a slot 131, and the slot 131 is electrically connected to the battery cell 130. A front-end surface of the second shell portion 120 is provided with a through groove 123, and the slot 131 is exposed through the through groove 123. The male terminal is a pin provided on the body, and the pin is inserted into the slot 131 to realize an electrical connection between the two, thereby realizing an electrical connection between the battery pack 100 and the body. In some other embodiments, positions of the slot and the pin may be interchanged.

FIG. 12 is a schematic perspective view of a charging base according to an embodiment of the present disclosure.

Referring to FIG. 12, in some embodiments, the kitchen appliance includes a charging base 500. The battery pack 100 is detachably connected to the charging base 500, and the battery pack 100 separated from the body is capable of being connected to the charging base 500 for charging. Specifically, the charging base 500 is provided with a charging interface 510, and after the battery pack 100 is removed from the body, the battery pack 100 can be electrically connected to the charging base 500 by being plugged into the charging interface 510, so as to realize charging. The battery pack 100 can be used and charged alternately, so as to prolong the battery life of various types of bodies.

The above-mentioned embodiments do not constitute a limitation on the protection scope of the technical solution. Any modifications, equivalent replacements and improvements made within the spirit and principles of the above-mentioned embodiments shall be included within the protection scope of this technical solution.

The foregoing descriptions are merely specific embodiments of the present disclosure, but are not intended to limit the protection scope of the present disclosure. Any variation or replacement readily figured out by a person skilled in the art within the technical scope disclosed in the present disclosure shall all fall within the protection scope of the present disclosure.

## Claims

1. A kitchen appliance, comprising: a body, a mounting cavity being providing in the body, and the mounting cavity having a mounting opening located on a surface of the body; and a battery pack (100) detachably connected to the body; wherein the battery pack (100) has a mounted state and a dismounted state, in the dismounted state, the battery pack (100) is capable of moving into or out of the mounting cavity through the mounting opening, and after the battery pack (100) is separated from the body, the mounting cavity is exposed to the surface of the body; and in the mounted state, the battery pack (100) is mounted in the mounting cavity, and an end of the battery pack (100) is exposed through the mounting opening.

2. The kitchen appliance according to claim 1, wherein the body comprises a first engaging portion, and the battery pack (100) comprises a second engaging portion; and in the mounted state, the first engaging portion is engaged with the second engaging portion.

3. The kitchen appliance according to claim 2, wherein the battery pack (100) comprises a plurality of second engaging portions, the plurality of second engaging portions are configured to adapt to the first engaging portions in the bodies of different types, respectively.

4. The kitchen appliance according to claim 3, wherein with a direction in which the battery pack (100) moves into the mounting cavity through the mounting opening as a mounting direction, the plurality of second engaging portions are spaced apart on a side wall of the battery pack (100) along the mounting direction.

5. The kitchen appliance according to claim 4, wherein the body is a vegetable cutter (200), a juice extractor, or a meat grinder, the body comprises a base (210) and a first body (220), the first body (220) is detachably connected to the base (210), a motor (230) is mounted in the base (210), the first body (220) comprises a working chamber, a cutting member is mounted in the working chamber, and the cutting member is configured to be driven by the motor (230) to rotate for cutting; and the mounting cavity is located in the base (210), and the mounting opening is located on a bottom surface of the base (210).

6. The kitchen appliance according to claim 5, wherein two of the second engaging portions are spaced apart on the side wall of the battery pack (100) along the mounting direction, and in the two second engaging portions, the one located at a rear end in the mounting direction is configured to adapt to the first engaging portion in the vegetable cutter (200), the juice extractor, or the meat grinder.

7. The kitchen appliance according to claim 6, wherein the vegetable cutter (200) comprises a first locking member (240), a button (250), and a first elastic member, the button (250) is exposed through the bottom surface of the base (210), the button (250) comprises a first sloping surface (251), and the first locking member (240) comprises a second sloping surface (242);the first elastic member abuts against the first locking member (240), so that the second sloping surface (242) is attached to the first sloping surface (251), and the first elastic member is configured to push the first engaging portion and the second engaging portion to be close to each other through an elastic force of the first elastic member; and the button (250) is capable of moving towards the first locking member (240), so that the first sloping surface (251) abuts against the second sloping surface (242) to push the first engaging portion and the second engaging portion to be away from each other, wherein a direction in which the first engaging portion and the second engaging portion are away from each other is perpendicular to a moving direction of the button (250).

8. The kitchen appliance according to claim 7, wherein the vegetable cutter (200) comprises a mounting rack (260) fixedly mounted to the base (210), the button (250) and the first locking member (240) are both slidably connected to the mounting rack (260), and the first elastic member is provided between the first locking member (240) and the mounting rack (260).

9. The kitchen appliance according to claim 6, wherein the battery pack (100) has a first depth and a second depth extending into the mounting cavity through the mounting opening, the second depth is greater than the first depth; and when the battery pack (100) extends into the first depth through the mounting opening, the battery pack (100) is in the mounted state; and when the battery pack (100) moves from the first depth to the second depth, the battery pack (100) switches to the dismounted state.

10. The kitchen appliance according to claim 9, wherein the vegetable cutter (200) comprises a second locking member (270) and a limiting member (290), in the dismounted state, the battery pack (100) is configured to move towards the mounting cavity and push the second locking member (270) to move simultaneously until the battery pack (100) is engaged with and fixed to the second locking member (270), and the second locking member (270) is limited by the limiting member (290) to maintain the mounted state; and in the mounted state, the battery pack (100) is configured to move further into the mounting cavity and push the second locking member (270) to move simultaneously, so that the second locking member (270) is disengaged from the limiting of the limiting member (290), thereby separating the battery pack (100) from the second locking member (270).

11. The kitchen appliance according to claim 10, wherein the vegetable cutter (200) comprises a mounting sleeve (280), the limiting member (290) is connected to the mounting sleeve (280), a third sliding groove (281) is provided in the mounting sleeve (280), the second locking member (270) extends into the third sliding groove (281), a second elastic member (2100) is provided between the second locking member (270) and the mounting sleeve (280), the second locking member (270) is provided with a limiting portion (276), and the battery pack (100) comprises a locking block (140);in the dismounted state, when the battery pack (100) is pressed, the second locking member (270) slides into the third sliding groove (281) along the mounting direction under abutment of the locking block (140) and gradually closes under limiting of the third sliding groove (281), and when the pressing of the battery pack (100) is stopped, the second locking member (270) is driven by the second elastic member (2100) to slide out of the third sliding groove (281) along a direction opposite to the mounting direction until the second locking member (270) holds the locking block (140) tightly when the limiting member (290) locks the limiting portion (276); and in the mounted state, when the battery pack (100) is pressed, the second locking member (270) slides into the third sliding groove (281) along the mounting direction under abutment of the locking block (140), so that the limiting member (290) is separated from the limiting portion (276), and when the pressing of the battery pack (100) is stopped, the second locking member (270) is driven by the second elastic member (2100) to slide out of the third sliding groove (281) along the direction opposite to the mounting direction and gradually opens, until the second locking member (270) is separated from the locking block (140).

12. The kitchen appliance according to claim 11, wherein the second locking member (270) is provided with a first limiting groove (274) and a second limiting groove (275) in communication with each other, the first limiting groove (274) and the second limiting groove (275) are arranged around the limiting portion (276), and when the battery pack (100) is mounted, the limiting member (290) moves in the first limiting groove (274); and when the battery pack (100) is dismounted, the limiting member (290) moves in the second limiting groove (275).

13. The kitchen appliance according to claim 12, wherein the limiting portion (276) is V-shaped to form a locking groove (2762), the limiting portion (276) is provided with a first limiting surface (2761), and the second limiting groove (275) comprises a second limiting surface (2751); in the dismounted state, when the battery pack (100) is pressed, the limiting member (290) is attached to the first limiting surface (2761) to move relatively along the direction opposite to the mounting direction, and when the pressing of the battery pack (100) is stopped, the limiting member (290) moves relatively along the mounting direction and is locked in the locking groove (2762); and in the mounted state, when the battery pack (100) is pressed, the limiting member (290) is separated from the locking groove (2762), and fits the second limiting surface (2751) to move relatively along the direction opposite to the mounting direction, and when the pressing of the battery pack (100) is stopped, the limiting member (290) moves relatively along the mounting direction and reaches an outlet of the second limiting groove (275).

14. The kitchen appliance according to claim 13, wherein the limiting member (290) is an elastic rod, the elastic rod is fixedly connected to the mounting sleeve (280), a free end (292) of the elastic rod is bent relative to a main body section (291) of the elastic rod, the free end (292) is capable of being locked in the locking groove (2762).

15. The kitchen appliance according to claim 5, wherein outer contours of projections of the base (210), the motor (230), and the battery pack (100) along the mounting direction are all circular or quasi-circular, and the motor (230) is located at a central position of the working chamber along a radial direction of the base (210); and a radius of the base (210) is R, a diameter of the battery pack (100) is d, and a radius of the motor (230) is r, R=K(d+r), where 1≤K≤1.2.

16. The kitchen appliance according to claim 5, wherein in the mounted state, in a plane perpendicular to the mounting direction, a projection of a center of the battery pack (100) is a first position, a projection of a center of the motor (230) is a second position, a projection of a center of gravity of the kitchen appliance is a third position, and the third position is located on a line connecting the first position and the second position.

17. The kitchen appliance according to claim 16, wherein a distance between the second position and the third position is s, and a weight of the battery pack (100) is m, where 0.024≤s/m≤0.032.

18. The kitchen appliance according to claim 4, wherein the body is a stirrer (300), the stirrer (300) comprises a second body (310), a handle (320), and a stirring head (330) capable of being driven by a motor to perform stirring, a side of the second body (310) is connected to the handle (320), the other side of the second body (310) is connected to the stirring head (330), an extension direction of the handle (320) is substantially parallel to that of the second body (310), and an extension direction of the stirring head (330) is substantially perpendicular to that of the second body (310); and the mounting opening is located on a side wall of the handle (320) facing away from the stirring head (330), and the mounting cavity extends from an interior of the handle (320) to an interior of the second body (310).

19. The kitchen appliance according to claim 18, wherein two of the second engaging portions are spaced apart on the side wall of the battery pack (100) along the mounting direction, and in the two second engaging portions, the one located at a front end in the mounting direction is configured to adapt to the first engaging portion of the stirrer (300).

20. The kitchen appliance according to claim 18, wherein the handle (320) and the second body (310) are connected through a connecting portion (350), an extension direction of the connecting portion (350) is substantially perpendicular to that of the second body (310), and the mounting cavity is at least distributed in the handle (320) and the connecting portion (350); and a ratio of a radial dimension of the battery pack (100) to a dimension of the connecting portion (350) along a radial direction of the battery pack (100) ranges from 0.63 to 0.96, and a ratio of an axial dimension of the battery pack (100) to a sum of dimensions of the handle (320), the connecting portion (350), and the second body (310) along an axial direction of the battery pack (100) ranges from 0.5 to 0.7.

21. The kitchen appliance according to claim 4, wherein the body is a handheld cooking machine (400), the handheld cooking machine (400) comprises a third body (410), and a grinding head (420) capable of being driven by a motor to perform grinding and crushing; and , an end of the third body (410) is connected to the grinding head (420), and the other end of the third body (410) is provided with the mounting opening in an extension direction thereof.

22. The kitchen appliance according to claim 21, wherein two of the second engaging portions are spaced apart on the side wall of the battery pack (100) along the mounting direction, and in the two second engaging portions, the one located at a front end in the mounting direction is configured to adapt to the first engaging portion in the handheld cooking machine (400).

23. The kitchen appliance according to claim 21, wherein a ratio of a radial dimension of the battery pack (100) to a dimension of the third body (410) along a radial direction of the battery pack (100) ranges from 0.62 to 0.95, and a ratio of an axial dimension of the battery pack (100) to a dimension of the third body (410) along an axial direction of the battery pack (100) ranges from 0.1 to 0.3.

24. The kitchen appliance according to any one of claims 1 to 23, wherein the kitchen appliance comprises a display screen configured to display remaining power of the battery pack (100), the display screen is provided on the body.

25. The kitchen appliance according to any one of claims 1 to 23, wherein the battery pack (100) comprises a display screen configured to display remaining power, with a direction in which the battery pack (100) moves into the mounting cavity through the mounting opening as a mounting direction, the display screen is located at a rear end of the battery pack (100) along the mounting direction.

26. The kitchen appliance according to claim 25, wherein, with the direction in which the battery pack (100) moves into the mounting cavity through the mounting opening as the mounting direction, the rear end of the battery pack (100) along the mounting direction protrudes from a surface of the body or is coplanar with the surface of the body.

27. The kitchen appliance according to any one of claims 1 to 23, wherein with a direction in which the battery pack (100) moves into the mounting cavity through the mounting opening as a mounting direction, a contour of a projection of the mounting cavity along the mounting direction coincides with an outer contour of a projection of the battery pack (100) along the mounting direction.

28. The kitchen appliance according to claim 27, wherein the battery pack (100) comprises an attachment portion, the attachment portion is located on at least a partial area of the side wall of the battery pack (100) along the mounting direction, and in the mounted state, the attachment portion is attached to a cavity wall of the mounting cavity.

29. The kitchen appliance according to any one of claims 1 to 23, wherein the battery pack (100) comprises a housing and three battery cells (130) provided in the housing, and with a direction in which the battery pack (100) moves into the mounting cavity through the mounting opening as a mounting direction, lines connecting centers of projections of the three battery cells (130) along the mounting direction form a triangle.

30. The kitchen appliance according to claim 29, wherein the lines connecting the centers of the projections of the three battery cells (130) along the mounting direction form an equilateral triangle.

31. The kitchen appliance according to claim 29, wherein the housing comprises a first shell portion (110) and a second shell portion (120) arranged sequentially along the mounting direction, a circuit board is mounted in the first shell portion (110), and the battery cell (130) is mounted in the second shell portion (120); and a dimension of the first shell portion (110) along the mounting direction is L1, and a dimension of the second shell portion (120) along the mounting direction is L2, where 0.2≤L1/L2≤0.4.

32. The kitchen appliance according to claim 31, wherein the first shell portion (110) and the second shell portion (120) are connected by a threaded fastener, and/or the first shell portion (110) is engaged with the second shell portion (120).

33. The kitchen appliance according to claim 32, wherein the first shell portion (110) is provided with a plurality of hooks (111) spaced apart along a circumferential direction of the battery pack (100), the second shell portion (120) is provided with a plurality of locking blocks (121) spaced apart along the circumferential direction of the battery pack (100), and the plurality of locking blocks (121) are snapped into the plurality of hooks (111) in one-to-one correspondence; and the first shell portion (110) is provided with a plurality of connecting posts (112) spaced apart along the circumferential direction of the battery pack (100), and the connecting posts (112) extend into the second shell portion (120) and are connected to the second shell portion (120) by the threaded fastener.

34. The kitchen appliance according to claim 31, wherein a front end of the second shell portion (120) along the mounting direction is provided with a female terminal, the body is provided with a male terminal, and the female terminal is plugged into the male terminal to achieve an electrical connection between the battery pack (100) and the body.

35. The kitchen appliance according to claim **1,** wherein the kitchen appliance comprises a charging base (500), the battery pack (100) is detachably connected to the charging base (500), and the battery pack (100) separated from the body is capable of being connected to the charging base (500) for charging.
